# FASCICULE DE BREVET EUROPEEN

(11) **EP 0 440 571 B1**
(45) Date de publication et mention de la délivrance du brevet: **13.07.1994**
(21) Numéro de dépôt: 91440005.6
(22) Date de dépôt: 29.01.1991
(51) Int. Cl.: B62D 61/12, B61D 3/18, B61D 47/00

(54) **Ensemble unitaire de manoeuvre d'essieu pour le train arrière d'un véhicule routier ou d'une remorque**
Einheitliche Handhabungsvorrichtung für die Hinterachse eines Strassenfahrzeuges oder eines Anhängers
Unitary handling unit for the rear axle of a road vehicle or a trailer

(30) Priorité: 29.01.1990 FR 9001176
(43) Date de publication de la demande: 07.08.1991
(73) Titulaire: LOHR INDUSTRIE S.A., F-67980 Hangenbieten (FR)
(72) Inventeur: Pascolo, Gilbert, F-67200 Oberhausbergen (FR)
(74) Mandataire: Metz, Paul

(56) Documents cités:
- DE-U- 8 805 838
- FR-A- 2 619 769
- GB-A- 2 070 531
- US-A- 3 794 344

## Description

La présente invention se rapporte à un ensemble unitaire pneumatique à grand débattement de manoeuvre, pour véhicule routier ou remorque notamment pour une remorque dite semi-portée.

Pour diverses raisons, il s'avère utile et souvent nécessaire de pouvoir, à partir de la cabine d'un camion, actionner le dispositif de relevage d'un essieu. Ceci permet, lors du trajet à charge réduite ou à vide, de rouler sur un seul essieu et ainsi de diminuer l'usure des pneumatiques équipant les roues relevées.

Le relevage d'essieu peut se révéler notablement intéressant également dans le cas d'une crevaison ou d'un ennui mécanique à l'une ou l'autre roue. En effet, il suffit d'actionner le système de relevage pour pouvoir procéder au changement de la roue ou effectuer une autre réparation.

La manoeuvre de relevage se montre rapide et ne nécessite aucun effort.

Pour d'autres raisons liées à des besoins de manoeuvres ou de transformations temporaires du véhicule ou de sa remorque, les essieux relevables apportent une assistance et une rapidité hautement appréciées.

Ainsi, dans le cas de la conversion d'une semi-remorque en wagon, le système de relevage d'essieu permet dans un premier temps de monter l'extrémité du châssis à la hauteur nécessaire pour admettre les trains de boggies sous le châssis puis d'escamoter le train de pneumatiques vers le haut afin de ménager une garde au sol suffisante lors du transport ferroviaire.

On connaît déjà des dispositifs de relevage d'essieu appliqués à des camions à plusieurs essieux arrière destinés à effectuer de longs parcours ou des trajets sur terrains accidentés.

Ceux-ci permettent soit d'économiser les pneumatiques soit de faciliter la traversée de zones à relief au sol prononcé. Ils comportent un essieu basculant vers le haut sous l'effet direct d'un vérin hydraulique qui agit directement en poussée-basculement sur l'essieu suspendu en vue de faire remonter l'ensemble roulant et porteur lié à cet essieu pour l'amener en position haute dans laquelle il est maintenu par blocage sur un support escamotable. De tels dispositifs sont connus par exemple de US-A-3 794 344 ou DE-U-8 805 838

Ces dispositifs s'avèrent efficaces et pratiques pour l'utilisation recherchée, toutefois, ils ne permettent pas le levage du véhicule par appui de la roue sur le sol et, bien souvent, nécessitent une manoeuvre manuelle de verrouillage-déverrouillage.

La présente invention a pour but d'apporter de nouvelles performances largement supérieures à celles des systèmes existant actuellement et une plus grande facilité d'usage en proposant un ensemble entièrement pneumatique et automatique de manoeuvre d'essieu à grand débattement, de haute sécurité et d'une rapidité de mouvements tout à fait remarquable.

A cet effet l'invention se rapporte à un ensemble de manoeuvre d'essieu pour le train arrière d'un véhicule routier ou d'une remorque comprenant un bras de suspension pivotant, un soufflet de suspension et son amortisseur montés entre une pièce de reprise pivotante et le bras de suspension constituant un ensemble basculant de suspension manoeuvré en basculement par un dispositif de manoeuvre pneumatique agissant directement sur l'essieu, la pièce de reprise ou l'extrémité du bras de suspension étant bloquée successivement par un verrou à commande pneumatique.

Les divers avantages spécifiques liés à la présente invention sont mentionnés de façon non limitative ci-dessous :
. relevage indépendant pour chaque essieu ;
. grand débattement de mouvements ;
. permet la transformation rapide et aisée d'une semi-remorque routière en wagon de chemin de fer;
. structure modulaire ;
. commande pneumatique à distance ;
. version automatisable facilement par logique pneumatique ;
. possibilité de levage d'une remorque pour mise à hauteur, par exemple sur un quai de chargement ;
. on obtient ainsi une suspension à grand débattement en n'utilisant que des éléments classiques de suspension.

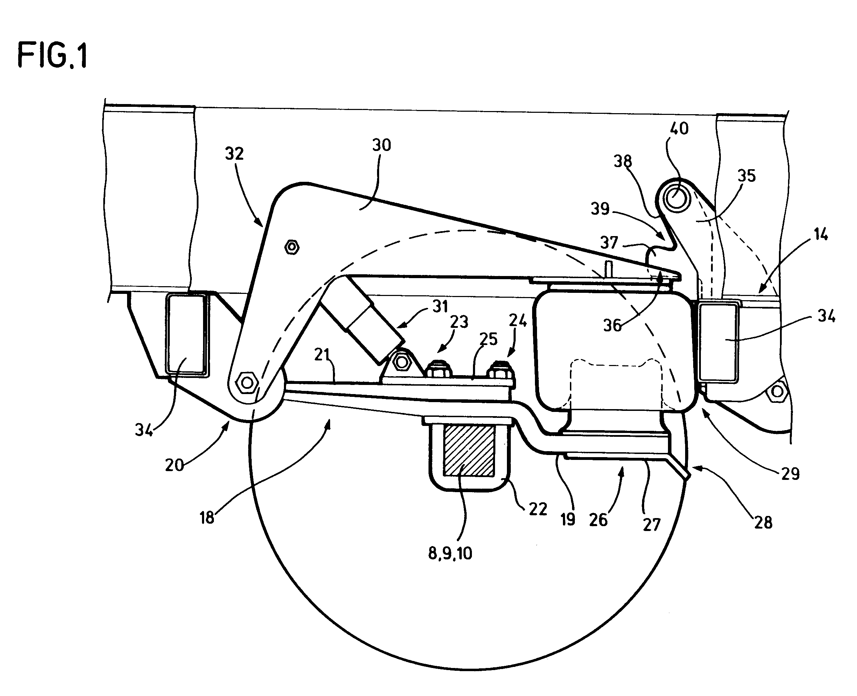

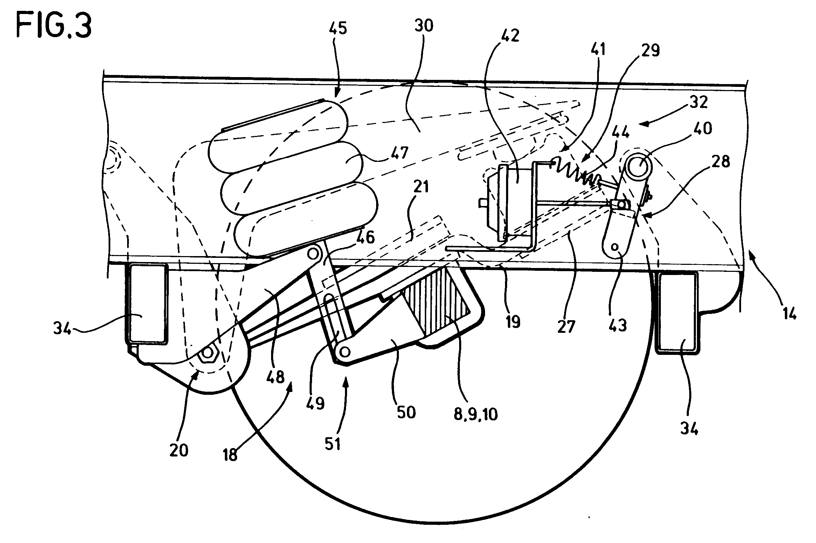

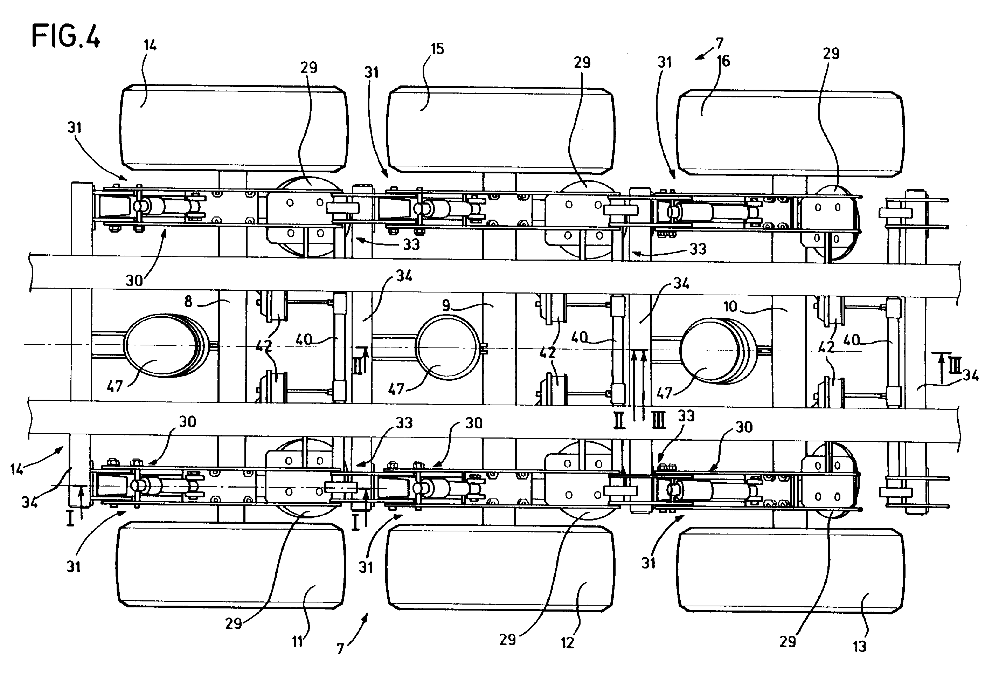

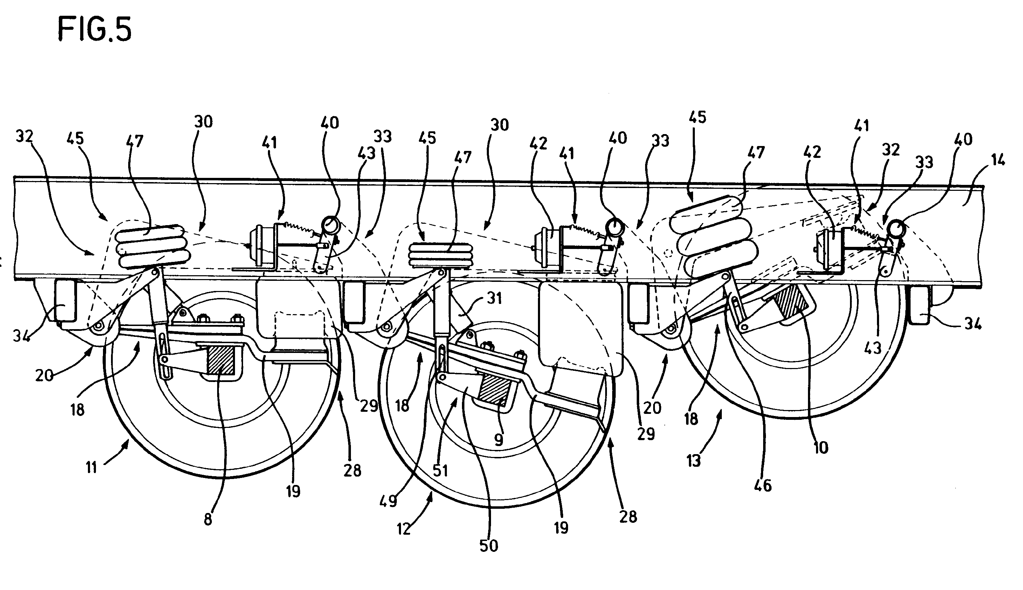

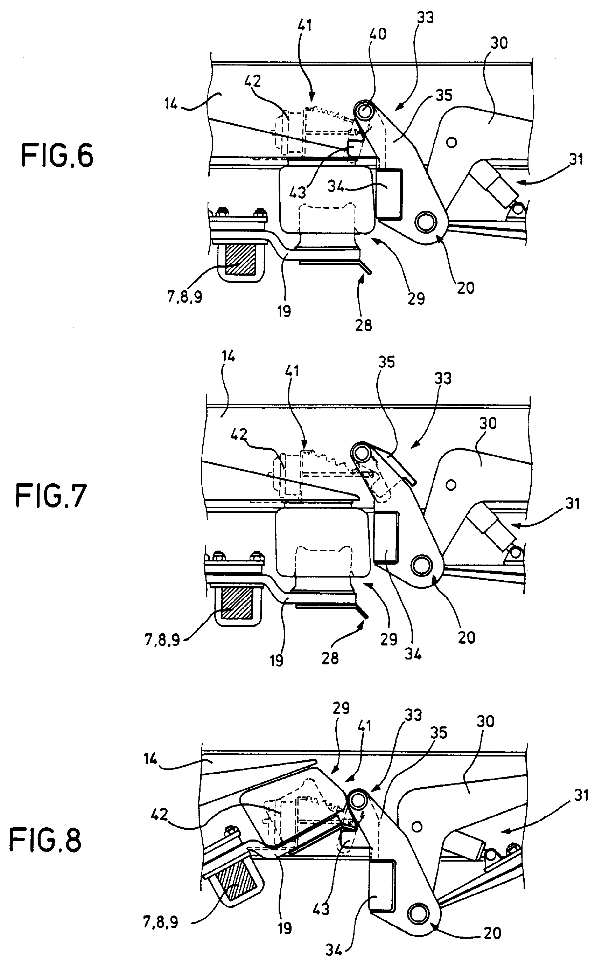

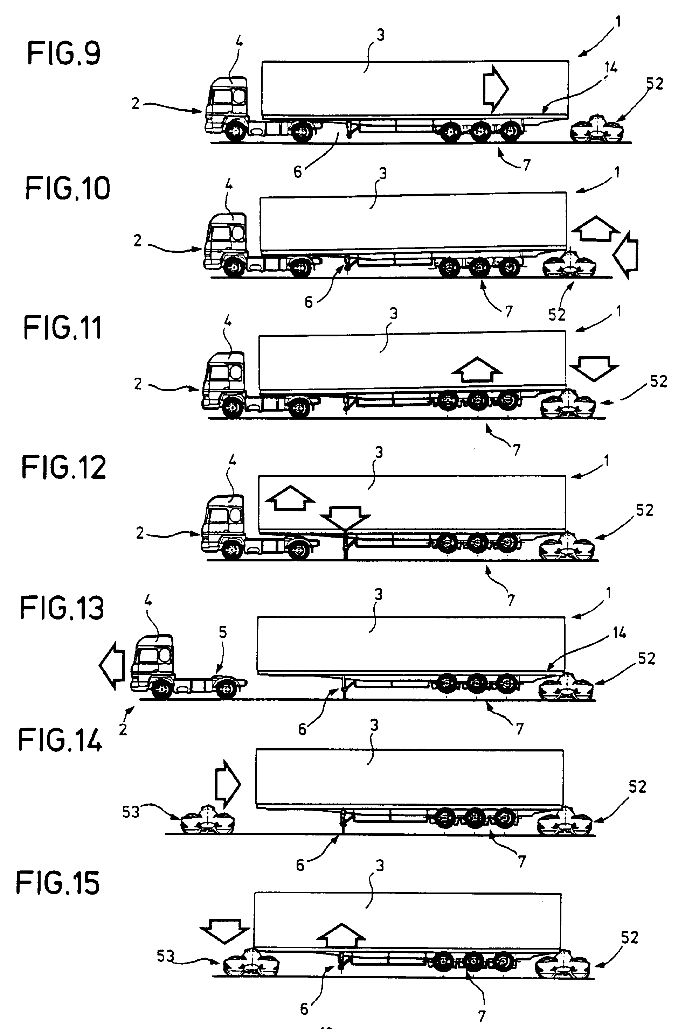

Les caractéristiques techniques et d'autres avantages de l'invention sont consignés dans la description qui suit, effectuée à titre d'exemple non limitatif sur un mode d'exécution en référence aux dessins accompagnants dans lesquels :
. la figure 1 est une vue en coupe d'un ensemble de manoeuvre d'essieu selon la ligne I-I de la figure 4;

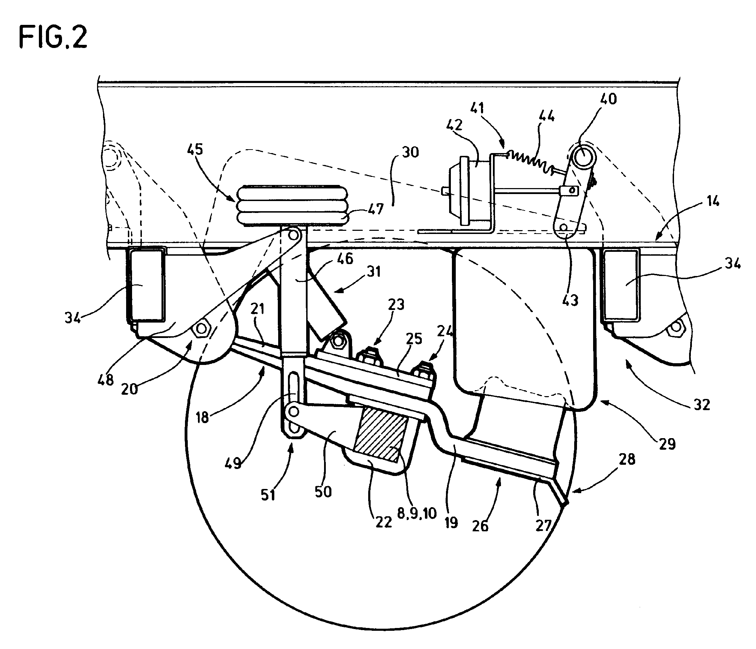

   la figure 2 est une vue en coupe d'un ensemble de manoeuvre d'essieu selon la ligne II-II de la figure 4 ;
. la figure 3 est une vue en coupe d'un ensemble de manoeuvre d'essieu selon la ligne III-III de la figure 4 ;
. la figure 4 est une vue en plan d'un train de trois essieux équipés chacun d'un ensemble de manoeuvre selon l'invention ;
. la figure 5 est une vue de profil montrant un train de trois roues relevables, chacune dans une position caractéristique différente d'utilisation, de gauche à droite : position route, position de levage, position de relevage ;
. les figures 6, 7 et 8 sont des vues schématiques simplifiées illustrant le fonctionnement du verrou de relevage dans les positions caractéristiques de verrouillage en position de route, de déverrouillage, et de verrouillage en position relevée ;
. les figures de 9 à 15 sont des schémas illustratifs d'application sur une semi-remorque dans lesquels les flèches montrent les différents mouvements verticaux et horizontaux nécessaires.

On décrira ci-après l'ensemble fonctionnel unitaire de manoeuvre de l'essieu dont les extrémités portent chacune une roue simple ou jumelée.

Bien entendu, l'invention s'applique aussi bien à chacun des essieux d'un véhicule routier ou d'une remorque, voire à chacun des essieux d'un véhicule routier à plusieurs essieux.

L'ensemble de manoeuvre à grand débattement selon l'invention comprend les moyens généraux suivants décrits comme appliqués à titre d'exemple non limitatif sur un véhicule routier articulé et, notamment, sur une semi-remorque à train arrière formé de trois essieux.

Un convoi routier articulé 1 est constitué par exemple d'un véhicule tracteur-remorqueur ou por-teur-remorqueur 2 et d'une remorque 3 quelconque par exemple du type semi-portée appelée ci-après semi-remorque.

Le tracteur-remorqueur 2 comporte une cabine 4 et un organe d'accouplement et d'appui connu sous la dénomination de sellette 5. La semi-remorque repose sur le sol à l'état désaccouplé par des béquilles 6 à l'avant et un train 7 de roues à l'arrière formé par exemple de trois essieux 8, 9, 10 portant sur six couples de roues 11, 12, 13, 14, 15 et 16 supportant un châssis 17.

Le train 7 de roues est susceptible de mouvements verticaux de grand débattement, indépendants ou simultanés des essieux entre une position de roulage, une position de levage dans laquelle l'ensemble de manoeuvre selon l'invention soulève la remorque et une position de relevage dans laquelle il relève entièrement chaque essieu pour ménager une garde au sol suffisante à l'application envisagée routière ou ferroviaire, la remorque étant soutenue à ses deux extrémités par un seul ensemble porteur.

Les mouvements d'ensemble du train de roulage sont possibles grâce à la coordination par la programmation des commandes pneumatiques de chaque ensemble unitaire de manoeuvre propre à chaque essieu. Ceux-ci sont unitaires et indépendants dans leur fonction mécanique, mais restent reliés entre eux de par leur commande pneumatique.

Chaque couple de roues porte un essieu tel que 8, 9 et 10 dont les mouvements de relevage ou de levage du châssis par réaction sur le sol sont mis en oeuvre par l'ensemble de manoeuvre ou leur association selon l'invention.

Plus particulièrement, en se référant à la figure 1, chaque essieu est fixé au voisinage de chaque roue à un bras indépendant de suspension tel que 18, par exemple sous la forme d'un ressort à lame inférieure 19 articulée sur un axe de suspension 20 et à lame supérieure 21 également montée sur l'axe de suspension 20 qui vient recouvrir la lame inférieure 19 et compléter l'ensemble mécanique formant le bras 18.

L'essieu est fixé à ces deux lames par l'intermédiaire d'un cavalier 22 immobilisé sur la lame supérieure 21 des écrous 23 et 24 portant sur une platine d'appui 25.

La lame inférieure 19 est prolongée par une extrémité plane 26 légèrement décalée vers le bas équipée en sous-face d'un renfort 27 prolongé par une patte d'encliquetage 28 en biais.

L'extrémité plane 26 porte l'extrémité basse d'un soufflet de suspension 29 dont l'extrémité supérieure est fixée à la sous-face d'une pièce de reprise 30 à partie médiane coudée. L'autre extrémité de la pièce de reprise 30 est articulée à pivotement sur l'axe de suspension 20.

Un amortisseur 31 de suspension, par exemple du type télescopique, est articulé par l'une de ses extrémités sur une patte 32 solidaire de la platine d'appui 25 et par son autre extrémité à la pièce de reprise 30 au niveau de sa partie médiane coudée.

La pièce de reprise 30 et le bras de suspension 18 reliés entre eux par l'amortisseur 31 et le soufflet de suspension 27 constituent un ensemble basculant de suspension 32 autour de l'axe de suspension 20, ensemble de suspension 32 déformable par rapprochement et éloignement élastiques l'un par rapport à l'autre du bras de suspension et de la pièce de reprise 30.

Cet ensemble est immobilisé vers le haut par un verrou 33 à double blocage et à commande pneumatique de verrouillage-déverrouillage.

Il s'agit d'un verrou basculant monté en appui sur l'axe de suspension 20 et sur une traverse adjacente de châssis 34. Il comprend une pièce de blocage 35 présentant d'une part une sous-face 36 formant front de butée-blocage pour la face supérieure de l'extrémité de la pièce de reprise 30 et d'autre part, une partie supérieure en plan incliné 37 suivi d'une rampe oblique 38.

Le plan incliné 37 et la rampe oblique 38 convergent vers un coin rentrant de blocage 39 formant une découpe d'encliquetage.

La pièce de blocage 35 est solidaire d'un axe de commande 40 actionné en pivotement par un dispositif pneumatique de commande 41 à vase 42 agissant sur une biellette 43 montée en rappel élastique par un ressort 44 biellette destinée à basculer la pièce de blocage 35 en agissant sur l'axe de commande 40. Celle-ci s'efface pour libérer le passage de l'extrémité de la pièce de reprise vers le haut ou vers le bas selon la commande des mouvements de l'essieu. Elle s'efface également, *comme on le verra ci-après, pour le passage de la patte* *d'encliquetage 28*.

Un ensemble moteur pneumatique actionne l'essieu en basculement.

Selon une caractéristique importante, celui-ci est monté en prise directe sur l'essieu.

Il s'agit d'un dispositif pneumatique de manoeuvre 45 articulé, formé d'un bras extensible 46 sous l'effet d'un soufflet pneumatique de manoeuvre 47. Le bras extensible 46 est articulé pivotant à un support 48 solidaire de la traverse de châssis 34 voisine. L'extrémité inférieure du bras extensible 46 présente un évidement de guidage 49 et est reliée à un support 50 solidaire de l'essieu par l'intermédiaire d'un renvoi d'angle 51 articulé dans l'évidement de guidage 49.

Comme on peut le constater sur les coupes, le verrou 33 à double blocage est fixé sur l'axe de suspension 20 de l'ensemble de manoeuvre d'essieu voisin réalisant ainsi la liaison de succession et de continuité de ces ensembles pouvant fonctionner simultanément ou indépendamment l'un de l'autre selon les besoins et les configurations.

Bien entendu, la roue comporte les dispositifs habituels de sécurité et de fonctionnement tels que mécanisme de freinage, roulement...

On décrira ci-après les différentes phases de fonctionnement de l'ensemble de manoeuvre d'essieu selon l'invention.

En position de roulage, le verrou 33 à double blocage maintient l'ensemble de suspension immobile par butée de l'extrémité de la pièce de reprise 30 contre la sous-face 36 de la pièce de blocage 35. La suspension joue par rapport à cette équerre. Les mouvements de débattement de celle-ci sont amortis par l'amortisseur 31.

Le mouvement de levage du châssis est provoqué par le soufflet de suspension 27 qui est gonflé au maximum, repoussant ainsi le bras de suspension vers le bas. Le renvoi d'angle est envoyé en extension vers le bas et vient en position de butée basse (figure 2).

Le mouvement de relevage s'effectue également par l'intermédiaire du soufflet de manoeuvre 47 qui est gonflé et provoque, par la rentrée du bras extensible, la traction de l'essieu vers le haut.

Auparavant, le verrou à double blocage 33 a libéré sa prise par basculement vers l'arrière de sa pièce de blocage 35 résultant de l'action sur l'axe de commande 40.

Le bras de suspension 18 pivote vers le haut. Dans son mouvement de basculement l'extrémité du bras dépasse la partie inférieure de la pièce de blocage en retrait et vient en butée haute. La pièce de blocage 35 est ensuite basculée vers l'avant et se présente sous la patte d'encliquetage. En fin de mouvement, par gravité, elle vient reposer et se loger dans le coin rentrant de blocage 39 réalisant le soutien de blocage à l'ensemble de suspension en position haute.

Comme déjà indiqué, les commandes pneumatiques peuvent être programmées de façon à réaliser la synchronisation des mouvements de relevage ou de levage des différents ensembles de manoeuvre d'un même train de roulage.

Une application intéressante de ce type d'ensemble de manoeuvre d'essieu concerne la conversion d'une semi-remorque routière en wagon.

Cette application est illustrée par les figures de 9 à 15.

Le convoi est amené sur une voie ferrée sur laquelle est disposé un boggie arrière 52. Après présentation de l'arrière de la remorque face au boggie arrière 52, on actionne simultanément les ensembles de manoeuvre d'essieu de manière à obtenir le levage suffisant du châssis pour glisser le boggie sous l'extrémité arrière de la remorque. Quand celle-ci porte sur le boggie, on actionne le dispositif de relevage d'essieu pour obtenir la garde au sol. On verrouille le bras de suspension 18 pour garantir le maintien dans cette position haute.

On sort ensuite les béquilles avant et on désaccouple le véhicule porteur-remorqueur 2. On amène un boggie avant 53 sous l'extrémité avant. On le verrouille en placé et on relève les béquilles avant.

La semi-remorque peut alors, après la pose des organes de sécurité, aller s'insérer entre deux wagons pour former un train à la manière d'un wagon classique.

Lors de la conversion en véhicule routier, les manoeuvres ci-dessus sont effectuées dans l'ordre inverse.

## Revendications

1. Ensemble unitaire de manoeuvre d'un essieu (8, 9, 10) pour un châssis (34) d'un véhicule routier, notamment remorque, comprenant une suspension formée d'un bras de suspension (18) pivotant autour d'un axe de suspension (20), d'un soufflet de suspension (27) et d'un amortisseur de suspension (31) constituant avec une pièce de reprise (30) pivotant autour de l'axe de suspension (20), un ensemble basculant de suspension (32), caractérisé en ce que l'essieu est actionné directement en basculement par un dispositif pneumatique de manoeuvre (45) articulé et en ce qu'un verrou (33) à double blocage est prévu sur le châssis en vue de bloquer l'ensemble basculant de suspension (32) en position de route et le bras de suspension (18) en position haute de relevage, ledit verrou (33) étant commandé par un dispositif pneumatique de commande (41).

2. Ensemble unitaire de manoeuvre d'essieu selon la revendication 1, caractérisé en ce que le dispositif pneumatique de manoeuvre (45) est un organe de traction.

3. Ensemble unitaire de manoeuvre d'essieu selon la revendication 2, caractérisé en ce que le dispositif pneumatique de manoeuvre (45) comprend un soufflet.

4. Ensemble unitaire de manoeuvre d'essieu selon les revendications 1, 2 et 3, caractérisé en ce que le dispositif pneumatique de manoeuvre (45) est formé d'un bras rétractable (46) sous l'effet d'un soufflet pneumatique de manoeuvre (47).

5. Ensemble unitaire de manoeuvre d'essieu selon la revendication 1 et 2, caractérisé en ce que le bras de suspension (18) comporte en extrémité une patte d'encliquetage (28) qui vient s'immobiliser dans le verrou (33) en position haute de relevage.

6. Ensemble unitaire de manoeuvre d'essieu selon la revendication 1, caractérisé en ce que la pièce de reprise (30) est conformée en équerre.

7. Ensemble unitaire de manoeuvre d'essieu selon la revendication 1, caractérisé en ce que le verrou (33) comporte une pièce de blocage basculante (35).

8. Ensemble unitaire de manoeuvre d'essieu selon les revendications 6 et 7, caractérisé en ce que la pièce de blocage (35) du verrou (33) comprend d'une part une sous-face plane destinée à bloquer l'extrémité de la pièce de reprise (30) en butée vers le haut et d'autre part une découpe d'encliquetage à double plans convergents délimitant entre eux un coin rentrant de blocage (39).

9. Ensemble unitaire de manoeuvre d'essieu selon les revendications 6, 7 et 8, caractérisé en ce que le verrou (33) est actionné par un dispositif pneumatique de commande (41) à travers un axe de commande (40) pivotant, commun aux ensembles de manoeuvre des deux roues.

10. Ensemble unitaire de manoeuvre d'essieu selon la revendication 9, caractérisé en ce que le dispositif pneumatique de commande (41) comporte un vase (42).

## Patentansprüche

1. Baueinheit zum Betätigen einer Radachse (8,9,10) an einem Chassis (34) eines Straßenfahrzeugs, insbesondere eines Anhängers, mit einer Aufhängung, bestehend aus einem an einer Aufhängungsachse (20) angelenkten Radaufhängungslenker (18), einem Luftfederbalg (27) und einem Stoßdämpfer (31), der mit einem an der Aufhängungsachse (20) angelenkten Rückstellteil (30) eine kippbare Aufhängungseinheit (32) bildet, dadurch gekennzeichnet, daß die Radachse durch eine schwenkbar gelagerte pneumatische Betätigungseinrichtung (45) unmittelbar in eine Kippbewegung versetzt wird und daß eine doppeltwirkende Verriegelung (33) am Chassis angeordnet ist, um die kippbare Aufhängungseinheit (32) in der Fahrstellung und den Radaufhängungslenker (18) in seiner oberen Hubstellung festzusetzen, wobei die Verriegelung (33) durch eine pneumatische Steuereinrichtung (41) gesteuert wird.

2. Baueinheit zum Betätigen einer Radachse nach Anspruch 1, dadurch gekennzeichnet, daß die pneumatische Betätigungseinrichtung (45) ein Zugorgan ist.

3. Baueinheit zum Betätigen einer Radachse nach Anspruch 2, dadurch gekennzeichnet, daß die pneumatische Betätigungseinrichtung (45) einen Balg aufweist.

4. Baueinheit zum Betätigen einer Radachse nach Anspruch 1 bis 3, dadurch gekennzeichnet, daß die pneumatische Betätigungseinrichtung (45) durch einen unter Wirkung eines pneumatischen Betätigungsbalges (47) einziehbaren Arm (46) gebildet ist.

5. Baueinheit zum Betätigen einer Radachse nach Anspruch 1 und 2, dadurch gekennzeichnet, daß der Radaufhängungslenker (18) an einem Ende einen Sperrhaken (28) aufweist, der sich in der oberen Hubstellung an der Verriegelung (33) festsetzt.

6. Baueinheit zum Betätigen einer Radachse nach Anspruch 1, dadurch gekennzeichnet, daß das Rückstellteil (30) winklig ausgebildet ist.

7. Baueinheit zum Betätigen einer Radachse nach Anspruch 1, dadurch gekennzeichnet, daß die Verriegelung (33) ein kippbares Blockierstück (35) aufweist.

8. Baueinheit zum Betätigen einer Radachse nach Anspruch 6 und 7, dadurch gekennzeichnet, daß das Blockierstück (35) der Verriegelung (33) einerseits eine ebene Unterseite aufweist, um das Ende des Rückstellteils (30) nach oben durch Anschlag zu blockieren, andererseits eine Sperre in Form eines Einschnittes mit konvergenten Flächen, welche zwischen sich eine Blokkiernische (39) begrenzen.

9. Baueinheit zum Betätigen einer Radachse nach Anspruch 6 bis 8, dadurch gekennzeichnet, daß die Verriegelung (33) von einer pneumatischen Steuereinrichtung (41) über eine den Baueinheiten für die Betätigung zweier Räder gemeinsame, schwenkbare Steuerachse (40) betätigt wird.

10. Baueinheit zum Betätigen einer Radachse nach Anspruch 9, dadurch gekennzeichnet, daß die pneumatische Steuereinrichtung (41) einen Steuertopf (42) aufweist.

## Claims

1. A unitary operating assembly for an axle (8, 9, 10) for a chassis (34) of a road-going vehicle, particularly a trailer, comprising a suspension consisting of a suspension arm (18) pivoting about a suspension link pin (20), a suspension bellows (27) and a suspension shock-absorber (31) constituting, together with a recovery member (30) pivoting about the suspension link pin (10), a tiltable suspension assembly (32), characterised in that the axle is actuated directly with a rocking action by an articulated pneumatic operating device (45) and in that a double-locking bolt (33) is provided on the chassis and is intended to arrest the tiltable suspension assembly (32) in a road-going position and the suspension arm (18) in a high raised position, the said bolt (33) being operated by a pneumatic operating device (41).

2. A unitary axle operating assembly according to Claim 1, characterised in that the pneumatic operating device (45) is a traction member.

3. A unitary axle operating assembly according to Claim 2, characterised in that the pneumatic operating device (45) comprises a bellows.

4. A unitary axle operating assembly according to Claims 1, 2 and 3, characterised in that the pneumatic operating device (45) consists of an arm (46) retractable under the effect of a pneumatic operating bellows (47).

5. A unitary axle operating assembly according to Claim 1 and 2, characterised in that the suspension arm (18) has at the end a click-stop lug (28) which becomes immobilised in the bolt (33) in the high raised position.

6. A unitary axle operating assembly according to Claim 1, characterised in that the recovery member (30) is angled.

7. A unitary axle operating assembly according to Claim 1, characterised in that the bolt (33) comprises a tiltable locking member (35).

8. A unitary axle operating assembly according to Claims 6 and 7, characterised in that the locking member (35) of the bolt (33) comprises on the one hand a plane underside adapted to lock the end of the recovery member (33) in abutment upwardly and on the other a click-stop cut-out with double converging flaps defining between them a re-entrant locking angle (39).

9. A unitary axle operating assembly according to Claims 6, 7 and 8, characterised in that the bolt (33) is actuated by a pneumatic operating device (41) through a pivoting operating spindle (40) common to the operating assemblies of the two wheels.

10. A unitary axle operating assembly according to Claim 9, characterised in that the pneumatic operating assembly (41) comprises a vessel (42).
